# EUROPÄISCHE PATENTSCHRIFT

(11) **EP 0 868 691 B1**
(45) Veröffentlichungstag und Bekanntmachung des Hinweises auf die Patenterteilung: **28.01.2004**
(21) Anmeldenummer: 96945900.7
(22) Anmeldetag: 28.11.1996
(51) Int. Cl.: G06F 9/46, G06F 1/00

(54) **VERFAHREN ZUR ZUGRIFFSKONTROLLE AUF RECHNERKONTROLLIERTE PROGRAMME, DIE VON MEHREREN BENUTZEREINHEITEN GLEICHZEITIG BENUTZT WERDEN KÖNNEN**
PROCESS FOR ACCESS CONTROL TO COMPUTER-CONTROLLED PROGRAMS USABLE BY SEVERAL USER UNITS AT THE SAME TIME
PROCEDE DE CONTROLE D'ACCES A DES PROGRAMMES CONTROLES PAR ORDINATEUR POUVANT ETRE UTILISES SIMULTANEMENT PAR PLUSIEURS TERMINAUX UTILISATEURS

(30) Priorität: 22.12.1995 DE 19548397
(43) Veröffentlichungstag der Anmeldung: 07.10.1998
(73) Patentinhaber: SIEMENS AKTIENGESELLSCHAFT, 80333 München (DE)
(72) Erfinder: PFAFF, Oliver, D-10827 Berlin (DE)
(86) Internationale Anmeldenummer: PCT/DE1996/002284
(87) Internationale Veröffentlichungsnummer: WO 1997/023825

(56) Entgegenhaltungen:
- EP-A- 0 477 039
- EP-A- 0 523 881
- GB-A- 2 238 636
- SIGOIS BULLETIN, DEC. 1994, USA, Bd. 15, Nr. 2, ISSN 0894-0819, Seiten 40-44, XP000672421 MINENKO W ET AL: "An advanced application sharing system for synchronous collaboration in heterogeneous environments"
- HEWLETT-PACKARD JOURNAL, Bd. 45, Nr. 2, 1.April 1994, Seiten 23-36, XP000446035 GARFINKEL D ET AL: "HP SHAREDX: A TOOL FOR REAL-TIME COLLABORATION" in der Anmeldung erwähnt
- SHENG-UEI GUAN ET AL: "OPERATING SYSTEM FEATURES FOR SHARED WORKSPACE COOPERATION" 1.Januar 1991 , PROCEEDINGS OF SOUTHEASTCON, WILLIAMSBURG, APRIL 7 - 10, 1991, VOL. 1, PAGE(S) 321 - 325 , INSTITUTE OF ELECTRICAL AND ELECTRONICS ENGINEERS XP000286867 siehe Seite 322, rechte Spalte, Zeile 47 - Seite 323, linke Spalte, Zeile 59

## Beschreibung

Durch ein sogenanntes "Sharing" von rechnerkontrollierten Programmen können Standard-Ein-Benutzer-Anwendungen (Programme) in rechnergestützte Konferenzen eingebracht werden. Die an der Konferenz beteiligten Personen, die sich an verschiedenen Standorten befinden können, können dadurch gemeinsam mit der Standard-Ein-Benutzer-Anwendung arbeiten. Die Ausgaben der jeweiligen gemeinsam genutzten Anwendung können alle Beteiligten beobachten. Genau einer der beteiligten Personen kann zu jedem Zeitpunkt Eingaben an die Anwendung machen.

Diese technische Konstruktion zur Anwendungsverteilung ist die Basis von informationstechnischen Systemen zur Unterstützung synchroner Kollaboration geographisch verteilter Personen.

Bei der technischen Umsetzung des "Sharing" von Anwendungen gibt es bislang zwei verschiedene Rollen für die Anwender. Es handelt sich dabei zum einen um den sogenannten "Token Holder", womit diejenige Person bezeichnet wird, die zu dem jeweiligen Zeitpunkt das Recht hat, Eingaben für die Anwendung zu machen, und zum anderen um die sogenannten "Observer", womit die anderen an der Konferenz beteiligten Personen bezeichnet werden, welche die Ausgabe der Anwendung zwar beobachten können, jedoch zu dem jeweiligen Zeitpunkt kein Recht haben, eine Eingabe für die Anwendung zu machen.

Die Rolle des "Token Holder" ist zeitabhängig. Sie kann während einer Konferenz zwischen den Beteiligten wechseln, jedoch gibt es zu jedem Zeitpunkt immer genau einen "Token Holder". Dies bedeutet, daß zu jedem Zeitpunkt immer genau nur eine Person das Recht hat, Eingaben für die Anwendung zu machen. Durch diese technische Lösung arbeitet jeder "Token Holder" unter den Privilegien und mit den Zugriffsrechten des Besitzers der Anwendung, also unter den Rechten desjenigen Benutzers, der die Anwendung gestartet hat. Somit kann der "Token Holder" mit der Anwendung genau die Operationen ausführen, zu denen der Besitzer der Anwendung berechtigt ist. Damit ist auch der "Token Holder" nicht mehr von dem eigentlichen Besitzer der Anwendung unterscheidbar. Für die Anwendung ist nicht erkennbar, daß verschiedene Personen mit ihr arbeiten und ebensowenig, wer zu einem bestimmten Zeitpunkt mit ihr arbeitet. Gewissermaßen wird der jeweilige "Token Holder" durch die existierenden technischen Konstruktionen der "Sharing-Systeme" zu einer Personifikation des Anwendungsbesitzers.

Diese Vorgehensweise birgt große Sicherheitsrisiken in sich, da der "Token Holder" dadurch z. B. Zugriff auf das gesamte Dateisystem des Besitzers der Anwendung hat, wenn die Anwendung beispielsweise ein Textverarbeitungsprogramm mit entsprechender Funktionalität ist. In diesem Fall könnte der "Token Holder" Dateien unerlaubterweise löschen, verändern, lesen oder kopieren, ohne daß der Besitzer der Anwendung unbedingt davon Kenntnis nehmen muß.

Fenster-Systeme werden zur Zeit in zwei bekannte Kategorien unterteilt je nach Operations- und Betriebsart, die diese Fenster-Systeme verwenden.

Zum einen sind dies sogenannte Client-Server-Fenster-Systeme mit einer offenen Netzschnittstelle (R. Scheifler et al, The X-Window-System, ACM Transactions on Graphics, Vol. 5, No. 2, S. 79 - 109, April 1986) , zum anderen solche ohne offene Netzschnittstelle. Letztere sind auch als monolithische graphikbasierte Fenster-Systeme GDWS bekannt (Microsoft Windows 3.1 Programmer's Reference, Volume 1: Overview, Microsoft Press, Redmond, ISBN 1-55615-453-4, 1992; R. Orfali et al, Client/Server Programming with OS/2, Van Nostrand Reinhold, New York, ISBN 0-442-01833-9, 1993; Inside Macintosh, Volume VI, Addison Wesley, ISBN 0-201-57755-0, 1991).

Weiterhin sind auch Erweiterungen, die die Fenster-Systeme zu einem "Sharing"-fähigen Fenster-System machen, bekannt (H. Abdel-Wahab et al, Issues, Problems and Solutions in Sharing X Clients on Multiple Displays, Internetworking: Research and Experience, Vol. 5, S. 1 - 15, 1994;
D. Garfinkel.et al, HP Shared X: A Töol for Real-Time Collaboration, Hewlett-Packard Journal, S. 23 - 3 6, April 1994;
W. Minenko, Transparentes Application-Sharing unter X Window, Multimediale Telekooperation, Deutsches Forschungszentrum für Künstliche Intelligenz (DFKI) GmbH, Saarbrücken, S. 1 - 8, 1994;
J. Baldeschwieler et al, A Survey on X Protocol Multiplexors, ACM SIGCOMM, Computer Communication Review, Swiss Federal Institute of Technology, Computer Engineering and Networks Laboratory (TIK) , ETH-Zentrum, Zürich, S. 16 - 24, 1993,
U. Pech, Sichtlich beeindrückt, PC Professionell, S. 71 - 88, Oktober 1995;
E. Chang et al, Group Coordination in Participant Systems, IEEE, Proceedings of the 24th Annual Hawaii International Conference on System Sciences, Vol. 3, No. 4, Kauai, HI, S. 589 - 599, Januar 1991;
A. Nakajima, A Telepointing Tool for Distributed Meeting Systems, IEEE Global Telecommunications Conference and Exhibition, Vol. 1, No. 3, San Diego, CA, S. 76 - 80, Dezember 1990;
J. Patterson, The Implications of Window Sharing for a Virtual Terminal Protocol, IEEE International Conference on Communications, Vol. 1, No.4, Atlanta, GA, S. 66 - 70, April 1990;
G. Herter, Intel ProShare, Accounting Technology, Vol. 11, No. 1, S. 49 - 54, Januar 1995;
D. Riexinger et al, Integration of Existing Applications into a Conference System, Proceedings of International Conference on Multimedia Transport and Teleservices Vienna, S. 346 - 355, November 1994).

Aus EP-A-523881 ist Zugriffskontrollverfahren auf ein Datenverarbeitungssystem, bei dem das Datenverarbeitungssystem von mehreren Benutzern gemeinsam genutzt wird, bekannt. Bei diesein Zugriffskontrollverfahren werden benutzerabhängige Zugriffsrechte für einen jeweiligen Benutzer definiert. Anhand dieser Zugriffsrechte wird geprüft, ob einem Benutzer für eine Anforderung an das Datenverarbeitungssystem ein entsprechendes Zugriffsrecht gewährt worden ist. Besitzt ein Benutzer ein entsprechendes Zugriffsrecht, so wird ihm der Zugriff auf das Datenverarbeitungssystem gewährt.

Ferner ist eine Sicherheitserweiterung für von mehreren Benutzern gemeinsam nutzbare Ein-Benutzer-Anwendungen bekannt (G. Gahse, "Zugriffskontrolle in Konferenzsystemen", IBM Deutschland Informationssysteme GmbH, Europäisches Zentrum für Netzwerkforschung, Heidelberg, 1995). Das bisher bekannte Verfahren zur Erweiterung der Sicherheit von Ein-Benutzer-Anwendungen in Konferenzsystemen beschreibt ein Zugriffskontrollverfahren, bei dem eine Ein-Benutzer-Anwendung, die von mehreren Benutzern gemeinsam genutzt werden soll, unter spezifischen "Sharing-Privilegien" abläuft. Bei diesem Verfahren wird den Benutzern eine gemeinsame, neue temporäre Identität für den Zeitraum der Kollaboration zugeteilt. Dieser gemeinsamen, temporären Identität werden Zugriffsrechte zugeordnet ("Sharing"-Privilegien), wodurch die ursprünglichen Rechte zurückgesetzt werden können. Damit kann z. B. keiner der Konferenzteilnehmer bei der Nutzung der Anwendung unberechtigt auf Daten des lokalen Systems zugreifen.

Ein wesentlicher Nachteil, der in dem bekannten Verfahren zu sehen ist, besteht darin, daß der vorgeschlagene Zugriffskontrollmechanismus nicht die verschiedenen Benutzer bei der Zuteilung von angeforderten Ressourcen berücksichtigt, und somit keine Unterscheidung zwischen dem "Token Holder" und dem Besitzer der Applikation möglich ist.

Eine Hauptursache für bei diesem Verfahren noch immer bestehende Sicherheitsrisiken liegt darin, daß bei diesem Verfahren noch immer mehrere Personen, z. B. der Systemadministrator, oder auch andere Benutzer, die in einer bestimmten ''Berechtigungsdatei" angegeben sind, die Rechte der anderen Benutzer für eine Anwendung setzen können. Durch diese Vorgehensweise können auch weiterhin andere Benutzer als der eigentliche Besitzer der Anwendung beispielsweise über das Dateisystem des Besitzers der Anwendung "bestimmen". Diese Voraussetzung der Vertrauenswürdigkeit der Benutzer, die die Rechte für Anwendungen verteilen, stellt ein erhebliches Sicherheitsrisiko dar.

Der Erfindung liegt das Problem zugrunde, ein Verfahren zur Zugriffskontrolle auf rechnerkontrollierte Programme, die von mehreren Benutzereinheiten gleichzeitig benutzt werden können, anzugeben, das die im vorigen beschriebenen Sicherheitsrisiken vermeidet.

Dieses Problem wird durch das Verfahren gemäß Patentanspruch 1 gelöst.

Bei diesem Verfahren wird explizit zwischen dem Besitzer der Anwendung, also demjenigen Benutzer, der die Anwendung gestartet hat, dem jeweiligen "Token Holder" und allen anderen Benutzern unterschieden. Der Besitzer einer Anwendung (Programm) erstellt eine Zugriffskontrolldatenbank, in der er auf der Basis der Identitäten der anderen Benutzer sowie der Art der Anforderung, die von den Benutzern gesendet werden, auf die eigene Anwendung bestimmen kann, ob die Anforderung des jeweiligen Benutzers erlaubt sein soll oder ob die Anforderung zurückgewiesen wird.

In dem Verfahren wird eine empfangene Anforderung für eine Anwendung (Programm und Menge von Bibliotheksroutinen), die von mehreren Benutzereinheiten gleichzeitig genutzt werden kann, von einem Mittel zur Organisation des Datenflusses (sogenannte Multiplexerkomponente) empfangen und daraufhin überprüft, ob die Anforderung von der Benutzereinheit gesendet wurde, die das Programm ursprünglich gestartet hatte.

Falls dies der Fall ist und falls der Anwendungsbesitzer zu dem betreffenden Zeitpunkt das Eingaberecht besitzt, wird die Anforderung direkt an das Programm weitergeleitet.

Anderenfalls wird für die Anforderung anhand der von dem Besitzer der Anwendung erstellten Zugriffskontrolldatenbank eine Zugriffskontrolle durchgeführt. Durch die Zugriffskontrolle wird erreicht, daß nur explizit von dem Besitzer der Anwendung "genehmigte" Anforderungen an das Programm weitergeleitet werden.

Durch diese zusätzliche Zugriffskontrolle wird die Sicherheit des "Sharings" von Anwendungen in Konferenzsystemen erheblich erhöht.

Indem vor der Kontrolle, ob die Benutzereinheit das Programm ursprünglich gestartet hatte, überprüft wird, ob die Benutzereinheit, die die Anforderung gesendet hatte, überhaupt ein Bearbeitungsrecht besaß, das heißt, ob diese Benutzereinheit "Token Holder" war, wird das Verfahren sehr einfach ausgestaltet. Falls dies zum Sendezeitpunkt nicht der Fall war, wird die Anforderung gar nicht erst den weiteren Kontrollschritten des Patentanspruchs 1 zugeführt.

Damit wird die Zugriffskontrolle für Anforderungen, die von Benutzern gesendet wurden, die zu dem jeweiligen Zeitpunkt des Sendens der Anforderung nicht "Token Holder" waren, vermieden, wodurch erhebliche Rechenzeiteinsparungen erzielt werden, da die Zugriffskontrolle nicht mehr für alle von dem Mittel zur Organisation des Datenflusses (Multiplexereinheit) empfangenen Anforderungen durchgeführt werden muß.

Durch die Weiterbildung des Verfahrens gemäß Patentanspruch 2 wird durch eine Authentikation der Benutzereinheit, die die Anforderung gesendet hat und/oder der Anforderung selbst die Sicherheit des Verfahrens weiter erhöht.

Weiterbildungen des erfindungsgemäßen Verfahrens ergeben sich aus den abhängigen Ansprüchen.

Im folgenden wird die Erfindung anhand von Zeichnungen, die zwei Ausführungsbeispiele des erfindungsgemäßen Verfahrens darstellen, näher erläutert.

Es zeigen
- Figur 1: eine prinzipielle Anordnung von Ressourcen, die ein Fenster-System eines ersten Ausführungsbeispiels verwenden, welches erweiterbar ist auf ein Fenster-System, in dem Anwendungen von mehreren Benutzern gleichzeitig genutzt werden können;
- Figur 2: eine prinzipielle Anordnung einer Erweiterung der in Figur 1 beschriebenen Ressourcen, wodurch die gleichzeitige Nutzung einer Anwendung durch mehrere Benutzer möglich ist;
- Figur 3: ein Ablaufdiagramm, in dem einzelne Verfahrensschritte des erfindungsgemäßeh Verfahrens dargestellt sind;
- Figur 4: ein Ablaufdiagramm, in dem eine Weiterbildung durch eine Authentikation der Anforderung und/oder des Senders der Anforderung durchgeführt wird;
- Figur 5: ein Ablaufdiagramm, in dem eine Weiterbildung des Verfahrens beschrieben ist, bei dem zu Beginn des Verfahrens überprüft wird, ob die die Anforderung sendende Benutzereinheit zu dem Sendezeitpunkt ein Bearbeitungsrecht für die Anwendung besitzt;
- Figur 6: ein Struktugramm, in dem die Information dargestellt ist, die in einer Zugriffskontrolldatenbank mindestens enthalten sein sollte;
- Figur 7: eine Anordnung, in der die nötige Sicherheitserweiterung der in Figur 2 beschriebenen Anordnung durch eine Zugriffskontrolldatenbank dargestellt ist.
- Figur 8: eine prinzipielle Anordnung von Ressourcen, die ein monolithisches, graphikbasiertes Fenster-System eines zweiten Ausführungsbeispiels verwenden, welches erweiterbar ist auf ein monolithisches, graphikbasiertes Fenster-System, in dem Anwendungen von mehreren Benutzern gleichzeitig genutzt werden können;

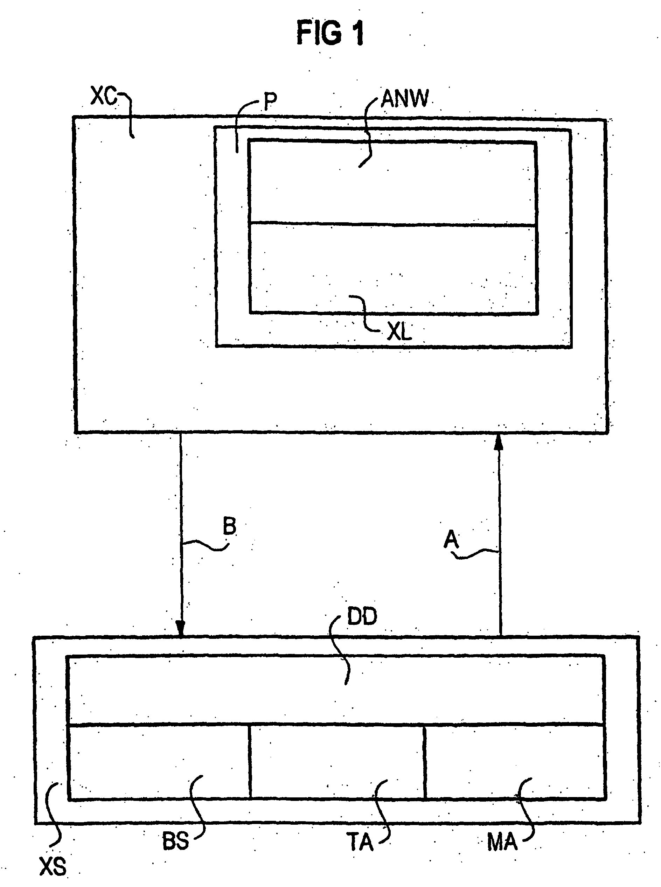

Anhand der Figuren 1 bis 8 wird die Erfindung weiter erläutert.

In Figur 1 ist zur Erläuterung eines ersten Ausführungsbeispiels eine Anordnung dargestellt, in der einzelne Komponenten (Ressourcen) beschrieben sind, die ein bekanntes, in (R. Scheifler et al, The X Window System, ACM Transactions on Graphics, Vol. 5, No. 2, S. 79 - 109, April 1986) beschriebenes Fenster-System nutzen.

Diese Anordnung weist mindestens folgende Komponenten auf:
- Eine Benutzereinheit, im weitern als Server XS bezeichnet, die wiederum folgende Komponenten aufweist:
   -- Mindestens eine Treibereinheit DD, die eine Kopplung zwischen weiteren Peripheriekomponenten mit einem im weiteren beschriebenen Klienten XC ermöglicht,
   -- eine Bildschirmeinheit BS,
   -- eine Tastatur TA,
   -- eine Maus MA,
- den Klienten XC, der mindestens folgende Komponenten aufweist:
   -- Eine Menge von Bibliotheksroutinen XL, und
   -- eine Anwendung ANW.

Die Bildschirmeinheit BS, die Tastatur TA, die Maus MA sowie eventuell außerdem vorhandene weitere Peripherieeinheiten bilden die im vorigen beschriebenen Peripheriekomponenten, die über die entsprechenden Treibereinheiten DD mit dem Klienten XC gekoppelt sind.

Die Menge der Bibliotheksroutinen XL des Klienten XC bildet die Schnittstelle zwischen dem bekannten, oben beschriebenen Fenster-System und der Anwendung ANW.

Zusammen bilden die Bibliotheksroutinen XL sowie die Anwendung ANW ein Programm P.

Auch wenn in diesem Ausführungsbeispiel nur jeweils eine Anwendung ANW bzw. ein Programm P beschrieben wird, können natürlich mehrere Anwendungen ANW und damit mehrere Klienten XC auf einer, diese Anwendungen ANW ausführenden Rechnereinheit zur Verfügung gestellt werden.

Diese in Figur 1 dargestellte Anordnung ist also nur ein sehr einfaches, prinzipielles Beispiel für den Ablauf der Kommunikation eines Klienten XC mit dem Server XS, wie sie unter dem bekannten Fenster-System durchgeführt wird.

Von dem Server XS wird eine Anforderung A an den Klienten XC gesendet, wodurch in dem Klienten XC Aktionen, beispielsweise in der Anwendung ANW, angestoßen werden. Diese Anforderung kann z. B. eine Eingabe auf der Tastatur TA repräsentieren, die durch die Treibereinheiten DD in die Anforderung A "übersetzt" und an den Klienten XC gesendet wird.

Die Anwendung ANW, beispielsweise ein Textverarbeitungsprogramm oder auch ein Kalkulationsprogramm, ein Zeichenprogramm und ähnliche Programme, kann nun die Eingabe akzeptieren und beispielsweise als neuer Buchstabe in der Textdatei aufnehmen.

Damit diese Änderung in der Textdatei auch auf dem Bildschirm BS dargestellt werden kann, wird in einer Antwort B in diesem Fall beispielsweise eine Darstellungsanforderung an die Bildschirmeinheit BS gesendet, eine Änderung in der Bildschirmdarstellung durchzuführen.

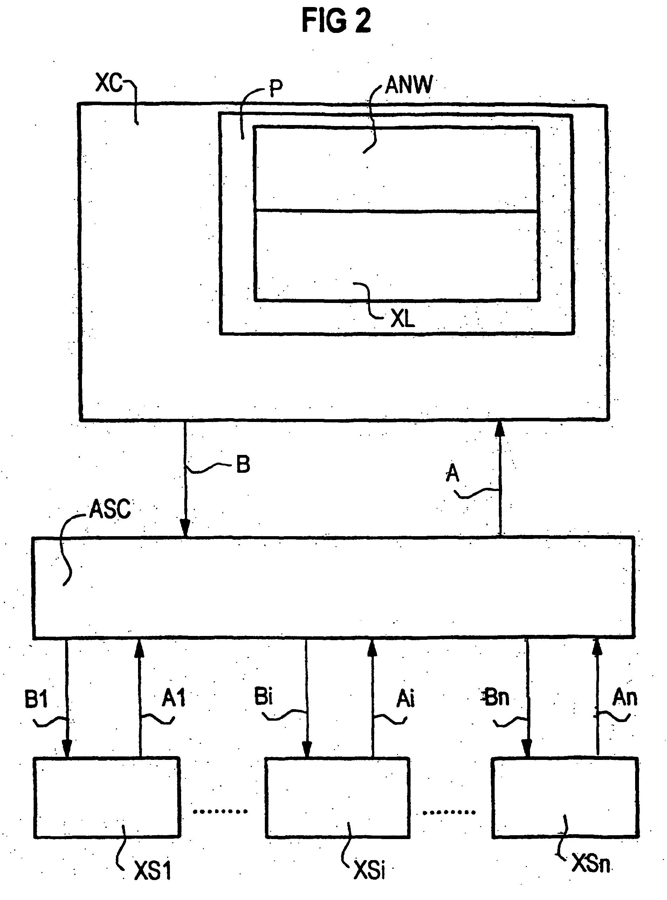

In Figur 2 ist eine Anordnung beschrieben, die verglichen mit der in Figur 1 beschriebenen Anordnung um ein Mittel zur Organisation des Datenflusses, das im weiteren als eine Multiplexerkomponente ASC bezeichnet wird, erweitert wird, so daß ein Konferenzsystem auf Basis des im vorigen beschriebenen Fenster-Systems ermöglicht wird.

Es sind mehrere unterschiedliche Realisierungen der Multiplexerkomponente ASC bekannt. Diese sind beispielsweise beschrieben in (D. Garfinkel et al, HP Shared X: A Tool for Real-Time Collaboration, Hewlett-Packard Journal, S. 23 - 36, April 1994; W. Minenko, Transparentes Application Sharing unter X Window, Multimediale Telekooperation, Deutsches Forschungszentrum für Künstliche Intelligenz (DFKI) GmbH, Saarbrücken, S. 1 - 8, 1994).

Eine Untersuchung über unterschiedliche Realisierungen der Multiplexerkomponente ASC ist beschrieben in (J. Baldeschwieler et al, A Survey on X Protocol Multiplexors, Swiss Federal Institute of Technology, Computer Engineering and Networks Laboratory (TIK), ETH-Zentrum, Zürich, 1993).

Durch die Multiplexerkomponente ASC ist es nun möglich, daß mehrere Server XSi über die Multiplexerkomponente ASC mit dem Klienten XC kommunizieren und so auf jeweils das Programm P zugreifen können. Ein Index i identifiziert hierbei jeweils jeden Server XSi eindeutig und ist eine beliebige natürliche Zahl zwischen 1 und n, wobei die Zahl n die Anzahl der Server XSi, die über die Multiplexerkomponente ASC mit dem Klienten XC gekoppelt sind, angibt.

Die Multiplexerkomponente ASC sollte mindestens folgende Eigenschaften aufweisen:
- Die Multiplexerkomponente ASC ist zwischen den Klienten XC und die Server XSi geschaltet.
- Gegenüber dem Klienten XC übernimmt die Multiplexerkomponente die Funktionalität eines einzigen Servers XS, um somit die Funktionalität der Anordnung gemäß Figur 1 zu erhalten.
- Gegenüber den n Servern XSi übernimmt die Multiplexerkomponente ASC die Funktionalität des Klienten XC, wodurch n "logische Klienten" durch die Multiplexerkomponente ASC modelliert werden.
   Es wird also jeweils von einem Server XSi eine Konferenzanfrage Ai an die Multiplexerkomponente ASC gesendet. In der Multiplexerkomponente ASG wird die jeweilige Konferehzanfrage Ai umgewandelt in die Anfrage A, die an den Klienten XC gesendet wird.
   Die Darstellungsanfrage B des Klienten XC wird im Gegensatz zu der Anordnung, die in Figur 1 beschrieben wurde, an die Multiplexerkomponente ASC gesendet, wo sie dann umgewandelt wird in eine Konferenzdarstellungsanfrage Bi, und an den jeweiligen Server XSi, der die Konferenzanfrage Ai gesendet hatte gesendet.
   Es kann aber auch je nach Typ der Konferenzdarstellungsanfrage Bi erforderlich sein, daß die Darstellungsanfrage B an jeden Server XSi verteilt wird. Dies ist beispielsweise notwendig, wenn die Darstellungsanfrage B in einer Anforderung an die Bildschirmeinheit BS besteht, da ja eine Änderung des Bildschirminhalts auf jeden Server XSi sichtbar sein muß.
- Die Multiplexerkomponente ASC übernimmt also die Funktionalität eines Multiplexers und Demultiplexers, also die Organistion des Datenflusses.
   Hierbei wird in der Multiplexerkomponente ASC die Darstellungsanfrage B des Klienten XC zu den angekoppelten Servern XSi gemultiplext, wobei Kopien der Darstellungsanfrage B an die einzelnen Server Xsi gesendet werden.
   Dabei werden Änderungen an den einzelnen Konferenzdarstellungsanfragen Bi durchgeführt entsprechend den unterschiedlichen Resourcen der Server XSi, beispielsweise bei unterschiedlichen Farbendarstellungen bei den Servern XSi, wenn unterschiedliche Arten von Bildschirmeinheiten HS bei den Servern XSi verwendet werden, oder ähnliches.
- Von den Servern XSi gesendete Konferenzanforderungen Ai werden in der Multiplexerkomponente ACS gesammelt und eventuell nicht erlaubte Konferenzanforderungen Ai werden herausgefiltert.
   Die erlaubten Konferenzanforderungen Ai werden an den Klienten XC weitergeleitet als ob diese Konferenzanforderungen Ai direkt von einem einzigen Server XS kämen und nicht, wie dies tatsächlich der Fall ist, von mehreren Servern Xsi.

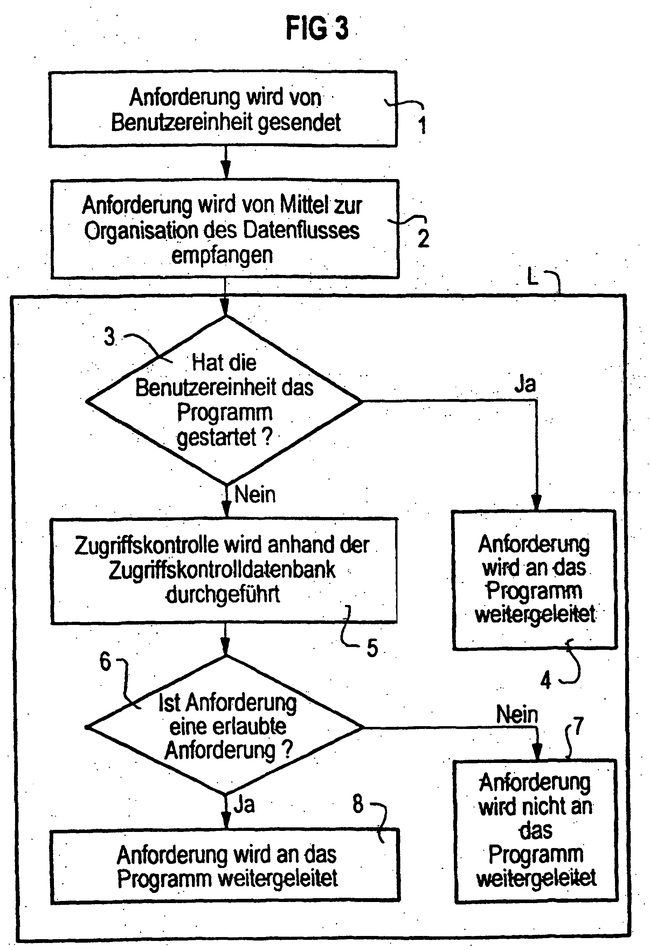

In Figur 3 sind einzelne Verfahrensschritte des erfindungsgemäßen Verfahrens dargestellt.

In einem ersten Schritt 1 wird eine Konferenzanforderung Ai von einem beliebigen Server XSi an die Multiplexerkomponente ASC gesendet.

Die Konferenzanforderung Ai wird von der Multiplexerkomponente ASC empfangen 2.

Nach Empfang der Konferenzanforderung Ai wird in einem weiteren Schritt 3 überprüft, ob der Server XSi, der die Konferenzanforderung Ai gesendet hat, das Programm P, auf das sich die Konferenzanforderung Ai bezieht, ursprunglich gestartet hat.

Dies entspricht der Kontrolle, ob der Sender der Konferenzanforderung Ai der Besitzer der Anwendung ANW ist.

Hat der die Konferenzanforderung Ai sendende Server XSi das Programm P ursprünglich gestartet und besitzt er zu dem betreffenden Zeitpunkt das Eingaberecht, wird die Konferenzanforderung Ai von der Multiplexerkomponente ASC direkt an den Klienten XC und somit an das Programm P und die Anwendung ANW weitergeleitet 4.

Dies geschieht, da im Rahmen dieser Erfindung der Besitzer der Anwendung ANW die komplette Kontrolle über seine Anwendung ANW besitzt. Somit ist es für diesen Fall auch nicht nötig, eine weitere Zugriffskontrolle für Konferenzanforderungen Ai, die von dem Besitzer der Anwendung ANW gesendet wurden, durchzuführen.

wird die Konferenzanforderung Ai jedoch von einem Server XSi gesendet, der nicht Besitzer der Anwendung ANW ist, wird für die Konferenzanforderung Ai eine zusätzliche Zugriffskontrolle anhand einer Zugriffskontrolldatenbank ZDK durchgeführt 5. Durch die Zugriffskontrolle wird die Konferenzanforderung Ai in erlaubte Konferenzanforderungen Ai und nicht erlaubte Konferenzanforderungen Ai unterschieden.

In einem weiteren Schritt 6 wird das Ergebnis der im vorigen durchgeführten Zugriffskontrolle 5 überprüft. Wurde die Konferenzanforderung Ai durch den Applikationsbesitzer als eine nicht erlaubte Konferenzanforderung Ai klassifiziert, wird die Konferenzanforderung Ai nicht an den Klienten XC und damit auch nicht an die Anwendung ANW weitergeleitet, sondern sie wird verworfen 7.

Wurde jedoch die Konferenzanforderung Ai durch den Applikationsbesitzer als eine erlaubte Konferenzanforderung Ai klassifiziert, wird diese Konferenzanforderung Ai an den Klienten XC und somit an die Anwendung ANW weitergeleitet 8.

Durch diese Vorgehensweise wird nicht mehr nur, wie bisher zwischen demjenigen, der ein Bearbeitungsrecht zu dem Zeitpunkt des Sendens der Konferenzanforderung Ai besitzt, also der sogenannte "Token Holder" ist, und den weiteren Benutzern, den sogenannten "Observern" unterschieden.

Es kommt durch das erfindungsgemäße Verfahren eine weitere Unterscheidung hinzu, nämlich die Unterscheidung, ob der Server XSi, der die Konferenzanforderung Ai gesendet hat, nicht auch der Besitzer der Anwendung ANW ist, also ob die Anwendung ANW nicht ursprünglich von dem entsprechenden Server XSi gestartet wurde.

Durch diese zusätzliche Unterscheidung wird bei geeigneter Klassifikation erlaubter Konferenzanforderungen Ai durch den Applikationsbesitzer in der Zugriffskontrolldatenbank ZDK verhindert, daß unbefugte Dritte auf Ressourcen des Besitzers der Anwendung ANW zugreifen können.

Durch das erfindungsgemäße Verfahren ist nunmehr nur noch der Besitzer der Anwendung ANW berechtigt, vollständig auf seine eigenen Ressourcen zuzugreifen.

Außerdem hat der Besitzer der Anwendung ANW das alleinige Recht, die Zugriffskontrolldatenbank ZDK aufzubauen, und somit als einziger die Möglichkeit, den Konferenzteilnehmern, mit denen er die von ihm gestartete Anwendung ANW gemeinsam nutzt, also allen anderen Servern XSi, ganz spezifisch bestimmte Rechte zuzugestehen oder zu nehmen.

Damit wird auch das Sicherheitsrisiko, das das in (G. Gahse, "Zugriffskontrolle in Konferenzsystemen", IBM Deutschland Informationssysteme GmbH, europäisches Zentrum für Netzwerkforschung, Proceeding of VIS 1995, S. 141 - 162, 1995) beschriebene Verfahren aufweist und im vorigen beschrieben wurde, vermieden, da auch keine weiteren Benutzereinheiten als der Besitzer der Anwendung ANW selbst, Zugriffsrechte auf die Anwendung ANW verteilen können und auch ohne Zustimmung des Besitzers der Anwendung ANW keine "allmächtigen" Zugriffsrechte auf die Anwendung ANW besitzen.

Die Zugriffskontrolldatenbank ZDK wird also ausschließlich von dem Besitzer der Anwendung ANW, also von demjenigen Server XSi aus, von dem die Anwendung ANW ursprünglich gestartet wurde, aufgebaut und kontrolliert.

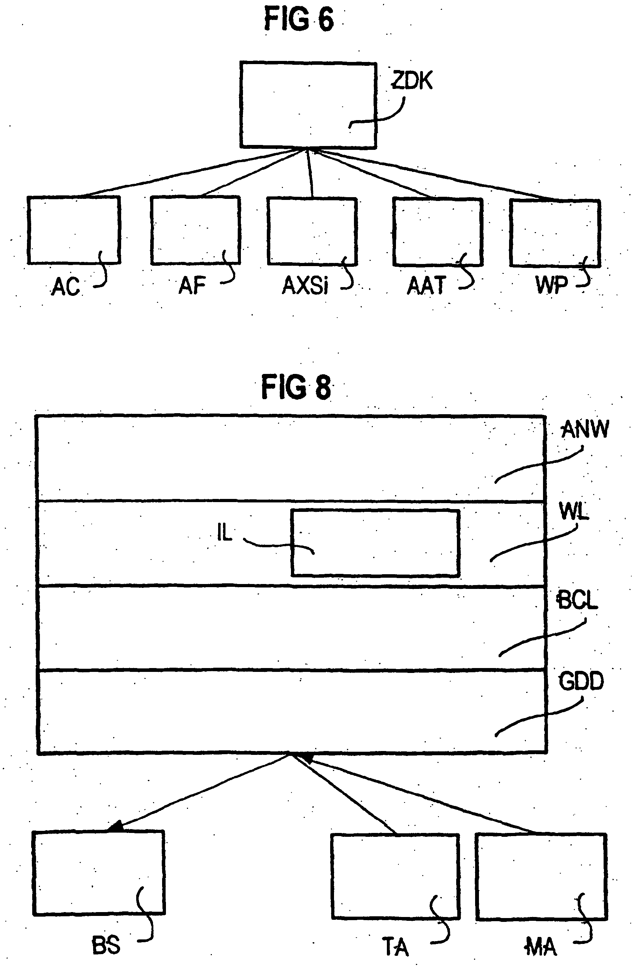

Die Zugriffskontrolldatenbank ZDK sollte mindestens folgende Informationen aufweisen, um die Zugriffskontrolle für jede Konferenzanforderung Ai effizient durchführen zu können (vgl. Figur 6) :
- Eine Angabe AC des Klienten XC, auf den sich der Eintrag in der Zugriffskontrolldatenbank ZDK bezieht, beispielsweise durch Angabe einer Internet-Protocol-Adresse (IP) und zusätzlich der entsprechenden Adresse des Ports,
- eine Angabe AXSi des Servers Xsi, auf den sich der Eintrag in der Zugriffskontrolldatenbank ZDK bezieht, beispielsweise durch Spezifizierung der Bildschirmadresse des jeweiligen Servers XSi,
- eine Angabe des jeweiligen Typs AAT der Konferenzanforderung Ai, auf den sich der Eintrag in der Zugriffskontrolldatenbank ZDK bezieht, beispielsweise bei dem im vorigen beschriebenen Fenster-System für das erste Ausführungsbeispiel: XCreate, XRequest, usw,
- weitere Parameter WP; die weiteren Parameter WP können beispielsweise einen erlaubten Wertebereich für den jeweiligen Konferenzanforderungstyp aufweisen.

Die Art und Weise, wie die Zugriffskontrolldatenbank ZDK aufgebaut und geändert werden darf, kann auf unterschiedliche Weise realisiert sein.

Es ist beispielsweise vorgesehen, daß der Besitzer der Anwendung ANW die Zugriffskontrolldatenbank ZDK als Textdatei mit Hilfe eines Texteditors aufbaut.

Weiterhin ist es auch vorgesehen, zum Aufbau der Zugriffskontrolldatenbank ZDK eine Bildschirmmaske zu verwenden, durch die die Eingabe zur Erstellung der Zugriffskontrolldatenbank ZDK für den Besitzer der Anwenung ANW intuitiv ermöglicht wird und somit erleichtert wird.

Es ist ferner vorgesehen, für vordefinierte Konferenzteilnehmer Schablonen zu definieren. Die Schablonen sind Zugriffskontrolldatenbanken, die für bestimmte Sicherheitszenarien, beispielsweise für bestimmte Applikationen und für bestimmte Konferenzteilnehmer, vordefiniert wurden und leicht abrufbar für die jeweils gestartete Anwendung ANW von dem Besitzer der Anwendung als Zugriffskontrolldatenbank ZDK eingebunden werden kann.

Zusätzliche Maßnahmen zur Authentikation der Nachrichten, die zur Definition, also dem Aufbau der Zugriffskontrolldatenbank ZDK oder auch zur Änderung von Daten in der Zugriffskontrolldatenbank ZDK dienen, sind in einer Weiterbildung des Verfahrens vorgesehen zur Vermeidung, daß Unbefugte Dritte Zugang zur Zugriffskontrolldatenbank ZDK selbst erhalten.

Kryptogräphische Verfahren zur Authentikation sind dem Fachmann bekannt, beispielsweise asymmetrische kryptographische Verfahren mit denen eine digitale Signatur und somit eine Authentikation des Senders der jeweiligen Nachricht möglich ist oder auch die verwendung einer Einwegfunktion, mit der ein Hash-Wert zumindest über einen Teil der Konferenzanforderung Ai gebildet wird.

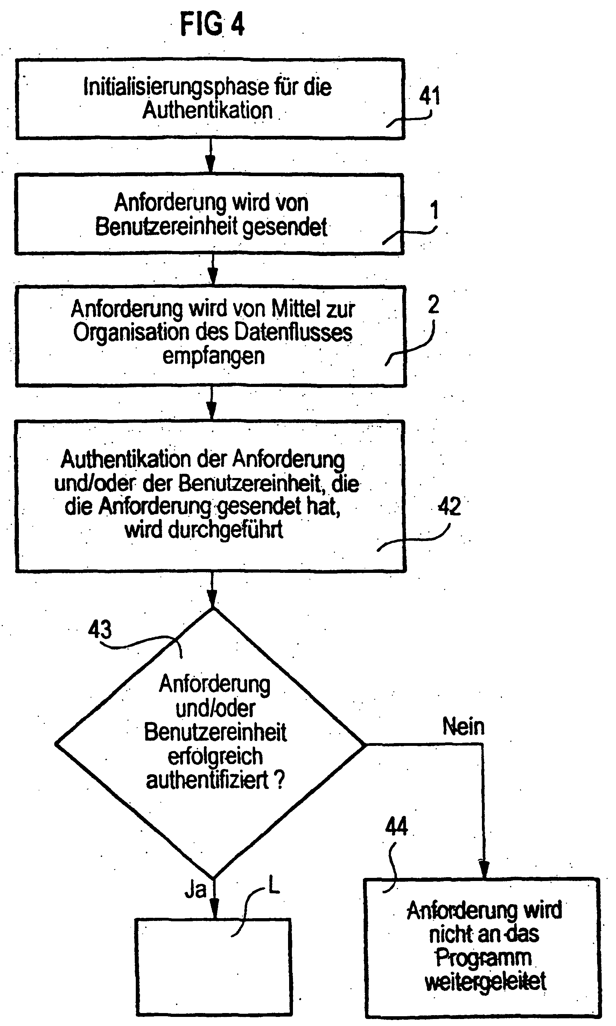

In einer Weiterbildung des Verfahrens, die in Figur 4 dargestellt ist, wird vor Beginn des Verfahrens eine Initialisierung der im weiteren beschriebenen Authentikation durchgeführt 41.

Dies geschieht beispielsweise durch folgendes Vorgehen.

Unter der Annahme, daß die Multiplexerkomponente ASC ein Anwendungszertifikat besitzt und die Benutzereinheiten, also die Server XSi, jeweils ein Benutzerzertifikat besitzen, die jeweils eindeutig den Benutzereinheiten zugeordnet sind, wird dann von der Multiplexerkomponente ASC eine erste Zufallszahl erzeugt.

Nachdem eine Transportverbindung zwischen der Multiplexerkomponente ASC und dem jeweiligen Server XSi aufgebaut wurde, wird von der Multiplexerkomponente ASC eine erste Verhandlungsnachricht an die Benutzereinheit gesendet, die mindestens folgende Komponenten aufweist:
- Das Programmzertifikat,
- die erste Zufallszahl,
- einen ersten Vorschlag für ein im weiteren zu verwendende krypthographische Verfahren, und
- eine digitale Unterschrift, die mindestens über die erste Zufallszahl sowie den ersten Vorschlag gebildet wird.

Die erste Verhandlungsnachricht wird von der jeweiligen Benutzereinheit, also dem Server XSi, empfangen.

Von der Benutzereinheit XSi wird das Programmzertifikat auf Korrektheit überprüft.

Ferner wird die digitale Unterschrift überprüft.

Falls die Überprüfung des Programmzertifikats und der digitalen Unterschrift ein positives Ergebnis liefert, wird in der Benutzereinheit XSi weiterhin überprüft, ob die vorgeschlagenen kryptographischen Algorithmen die in der ersten Verhandlungsnachricht vorgeschlagen wurden, im weiteren zur Authentikation und zur Sicherung der Übertragung verwendet werden können.

Wenn die Benutzereinheit XSi die vorgeschlagenen kryptographischen Algorithmen nicht unterstützen kann, wird von der Benutzereinheit, also dem Server XSi, ein zweiter Vorschlag in einer zweiten Vorschlagsnachricht gebildet und an die Multiplexerkomponente ASC gesendet. Der zweite Vorschlag weist kryptogrphische Verfahren auf, die die Benutzereinheit XSi unterstützt. Diese werden nunmehr der Multiplexerkomponente ASC als im weiteren Verfahren zu verwendende kryptographische Verfahren für diese logische Verbindung zwischen der Multiplexerkomponente und der Benutzereinheit XSi vorgeschlagen.

Die zweite Vorschlagsnachricht weist mindestens folgende Komponenten auf:
- Das Benutzerzertifikat des jeweiligen Servers XSi,
- eine zweite Zufallszahl, die von der Benutzereinheit XSi selbst erzeugt wurde,
- den zweiten Vorschlag,
- eine digitale Unterschrift, die jeweils mindestens über die erste Zufallszahl, die zweite Zufallszahl sowie den zweiten Vorschlag gebildet werden.

Die zweite Vorschlagsnachr icht wird an die Multiplexerkomponente ASC gesendet.

Für den Fall, daß die in dem ersten Vorschlag angegebenen kryptographischen Algorithmen von dem Benutzereinheit XSi unterstützt werden, wird von dem Benutzereinheit XSi eine Bestätigungsnachricht gebildet und an die Multiplexerkomponente ASC gesendet.

Die Bestätigungsnachricht weist mindestens folgende Komponenten auf:
- Das Benutzerzertifikat,
- die zweite Zufallszahl,
- eine positive Bestätigung, und
- eine digitale Unterschrift, die jeweils mindestens über die erste Zufallszahl, die zweite Zufallszahl, und die positive Bestätigung gebildet werden.

Die Bestätigungsnachricht wird an die Multiplexerkomponente ASC gesendet.

Von der Multiplexerkomponente ASC wird die Verhandlungsnachricht oder die Bestätigungsnachricht empfangen und es wird in der Multiplexerkomponente ASC geprüft, ob das Benutzerzertifikat sowie die digitale Unterschrift korrekt sind.

Weiterhin wird von der Multiplexerkomponente ASC für den Fall, daß die Überprüfung ein positives Ergebnis liefert und die empfangene Nachricht die Bestätigungsnachricht war, ein erster Sitzungsschlüssel unter Berücksichtigung der vereinbarten kryptographischen Algorithmen für eine folgende Nutzdatenübertragungsphase erzeugt.

Aus dem ersten Sitzungsschlüssel wird eine erste Sitzungsschlüsselnachricht gebildet und an die Benutzereinheit XSi gesendet, die mindestens folgende Komponenten aufweist:
- Den mit einem öffentlichen Schlüssel des Servers XSi verschlüsselten ersten Sitzungsschlüssel,
- eine Spezifikation der zu verwendenden kryptograaphischen Verfahren,
- eine mindestens über die erste Zufallszahl, die zweite Zufallszahl, den ersten Sitzungsschlüssel gebildete digitale Unterschrift sowie die Spezifikation der zu verwendenden kryptograaphischen Verfahren.

Wurde von der Multiplexerkomponente ASC die zweite Verhandlungsnachricht empfangen, und die Überprüfung des Benutzerzertifikats und der digitalen Unterschrift oder des Hash-Werts der zweiten Verhandlungsnachricht hat ein positives Ergebnis geliefert, wird in der Multiplexerkomponente ASC geprüft, ob die in der zweiten Verhandlungsnachricht vorgeschlagenen kryptographischen Algorithmen zur Durchführung der weiteren kryptographischen Verfahren von der Multiplexerkomponente ASC unterstützt werden.

Werden die vorgeschlagenen kryptographischen Verfahren von der Multiplexerkomponente ASC unterstützt, wird ein erster Sitzungsschlüssel unter Berücksichtigung der vereinbarten kryptographischen Algorithmen für die folgende Nutzdatenübertragungsphase erzeugt.

Weiterhin wird, wie im vorigen beschrieben wurde, eine erste Sitzungsschlüsselnachricht unter Verwendung des ersten Sitzungsschlüssels an die Multiplexerkomponente ASC gesendet.

Diese im vorigen beschriebene Vorgehensweise zum "Aushandeln" der zu verwendenden kryptographischen Verfahren wird solange wiederholt, bis sowohl die Benutzereinheit XSi als auch die Multiplexerkomponente ASC zuletzt vorgeschlagenen kryptographischen Verfahren akzeptieren.

In der Benutzereinheit XSi wird der erste Sitzungsschlüssel unter Verwendung eines privaten Schlüssels der Benutzereinheit XSi ermittelt. Ferner wird die digitale Unterschrift der ersten Sitzungsschlüsselnachricht überprüft.

Außerdem wird für den Fall, daß die Überprüfung der digitalen Unterschrift ein positives Ergebnis lieferte, eine zweite Sitzungsschlüsselnachricht gebildet unter Verwendung eines zweiten Sitzungsschlüssels, der von der Benutzereinheit XSi gebildet wird.

Die zweite Sitzungsschlüsselnachricht weist mindestens folgende Komponenten auf:
- Den mit einem öffentlichen Programmschlüssel der Multiplexerkomponente ASC verschlüsselten zweiten Sitzungsschlüssel, und
- eine mindestens über die erste Zufallszahl, die zweite Zufallszahl, den zweiten Sitzüngsschlüssel gebildete Digitale Unterschrift oder einen über dieselben Komponenten gebildeten Hash-Wert.

Von der Multiplexerkomponente ASC wird die zweite Sitzungsschlüsselnachricht empfangen und der zweite Sitzungsschlüssel ermittelt. Die digitale Unterschrift oder der Hash-Wert der zweiten Sitzungsschlüsselnächricht wird überprüft.

Lieferte die Prüfung der digitalen Unterschrift ein positives Ergebnis, werden die ausgetauschten Sitzungsschlüssel in der folgenden Nutzdatenübertragungsphase zur Verschlüsselung der Nutzdaten verwendet. Dabei verwendet jede beteiligte Instanz den Sitzungsschlüssel, der von ihr selbst generiert würde zum Senden von Nutzdaten, während der empfangene Sitzungsschlüssel ausschließlich zum Empfangen von Nutzdaten verwendet wird.

Weitere kryptographische Verfahren zum Schlüsselaustausch bzw. zur Bildung des Sitzungsschlüssels für die Nutzdatenverschlüsselung sind im Rahmen des erfindungsgemäßen Verfahrens ohne Einschränkungen einsetzbar.

Nachdem die Initialisierungsphase zur Authentikation 41 abgeschlossen ist, wird in der Nutzdatenübertragungsphase jeweils nach Empfang der jeweiligen Konferenzanforderung Ai in der Multiplexerkomponente ASC eine Authentikation der Konferenzanforderung Ai und/oder der die Konferenzanforderung Ai sendenden Benutzereinheit XSi durchgeführt 42.

In einem weiteren Schritt 43 wird überprüft, ob die Authentikation ein positives Ergebnis lieferte. Ist dies der Fall, wird die Konferenzanforderung Ai dem weiteren, im vorigen beschriebenen Verfahren zugeführt L.

Ergab jedoch die Authentikation 43 ein negatives Ergebnis, wird die Konferenzanforderung Ai verworfen, und somit nicht an den Klienten XC weitergeleitet 44.

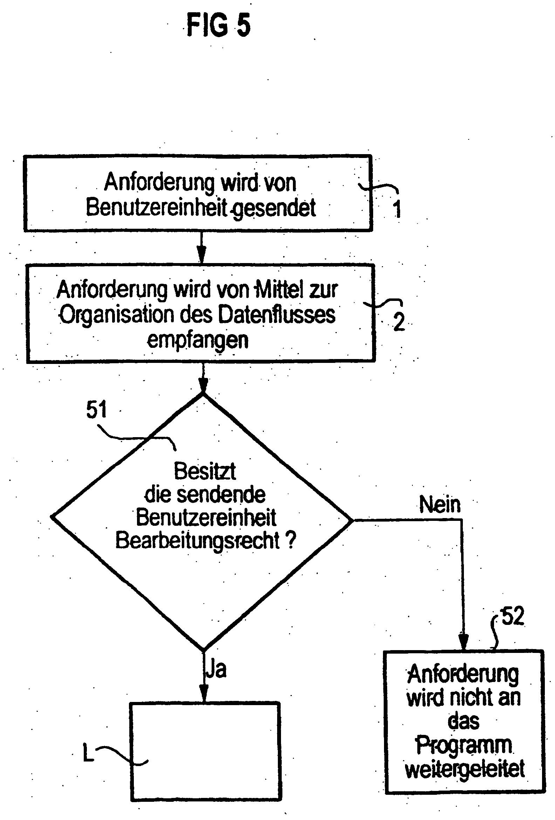

Eine Weiterbildung des Verfahrens liegt ferner darin, nach Empfang der Konferenzanforderung Ai durch die Multiplexerkomponente ASC 2 zu überprüfen, ob die Benutzereinheit XSi, die die Konferenzanforderung Ai gesendet hat, zu dem jeweiligen Sendezeitpunkt ein Bearbeitungsrecht besaß 51 (vgl. Figur 5).

Dies entspricht der Fragestellung, ob die Benutzereinheit XSi zu dem Sendezeitpunkt der Konferenzanforderung Ai "Token Holder" der Anwendung ANW war.

Ist dies der Fall, wird die Konferenzanforderung Ai den weiteren Verfahrensschritten des erfindungsgemäßen Verfahrens unterzogen L. Ist dies jedoch nicht der Fall, wird die Konferenzanforderung Ai nicht weitergeleitet und somit verworfen 52.

Diese Weiterbildung weist den Vorteil auf, daß eine Konferenzanforderung Ai, die ohnehin nicht erlaubt ist, da sie von einer Benutzereinheit XSi, die zur Zeit gar nicht das Bearbeitungsrecht besaß, gesendet wurde, dem gesamten Verfahren unterzogen wird. Damit werden überflüssige Zugriffskontrollen vermieden.

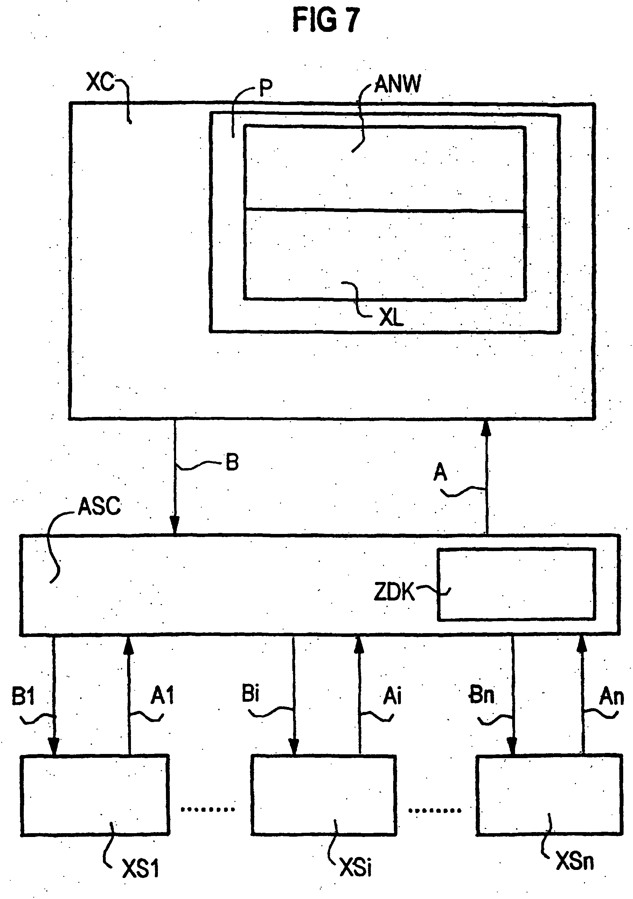

Die nötige Erweiterung der in Figur 2 beschriebenen Anordnung, damit die Anordnung das im vorigen beschriebene Verfahren durchführen kann, ist in Figur 7 dargestellt. Diese Erweiterung besteht darin, daß eine zusätzliche Zugriffskontrolldatenbank ZDK in der Multiplexerkomponente ASC vorgesehen ist.

Ferner müssen natürlich die vorgesehenen Überprüfungen, die im vorigen beschrieben wurden, implementiert werden.

In einem zweiten Ausführungsbeispiel wird das Verfahren beschrieben für Rechnereinheiten, die monolithische, graphikbasierte Fenster-Systeme verwenden, die keine offene Kommunikationsschnittstelle zwischen der Anwendung ANW und dem Fenster-System aufweisen (vgl. Figur 8).

Beispiele solcher monolithische, graphikbasierte Fenster-Systeme sind bekannt und wurden im vorigen zitiert.

Bei monolithischen, graphikbasierten Fenster-Systemen muß zum Verteilen einer Ein-Benutzer-Anwendung ebenfalls das Fensterprotokoll zwischen der Anwendung ANW und der Benutzeroberfläche "aufgebrochen" werden. Die Vorgehensweise hierbei ist prinzipiell analog zu der bereits beschriebenen. Die möglichen Stellen zum Eingriff in das Fensterprotokoll werden im folgenden geschildert.

Die Struktur dieses monolithischen, graphikbasierten Fenster-Systems GDWS ist in Figur 8 dargestellt.

Monolithische, graphikbasierte Fenstersysteme GDWS weisen mindestens folgende Komponenten auf:
- den Bildschirm BS,
- die Tastatur TA,
- die Maus MA,
- Graphikkartentreiber-Programme GDD,
- Graphik-Bibliotheksroutinen BCL,
- Fenster-Bibliotheksroutinen WL mit einem Input-Handler IL,
- die Anwendung ANW.

Die Anwendung ANW läuft bei diesem Ausführungsbeispiel in derselben Umgebung wie das Graphikbasierte Fenstersystem GDWS und beide verwenden eine Menge vow Funktionsaufrufen in einem gemeinsamen Speicher um miteinander zu kommunizieren.

Da Graphikbasierte Fenstersysteme GDWS keine offene Kommunikationsschnittstelle aufweisen, muß für Anwendungen ANW, die von mehreren Benutzern gleichzeitig genutzt werden sollen, in den Aufbau der in Figur 8 dargestellten Figur eingegriffen werden.

Die Erweiterungen können an verschiedenen Stellen des jeweiligen Graphikbasierten Fenstersystems GDWS vorgenommen werden, beispielsweise an einer ersten Programmierschnittstelle zwischen den Fenster-Bibliotheksroutinen WL und der Anwendung ANW, an einer zweiten Programmierschnittstelle zwischen den Graphik-Bibliotheksroutinen BCL und den Fenster-Bibliotheksroutinen WL oder an den Graphikkartentreiber-Programmen GDD.

Diese Änderungen sind nur möglich, falls die Fenster-Bibliotheksroutinen WL, die Graphik-Bibliotheksroutinen BCL oder die Graphikkartentreiber-Programme GDD nicht fest an die Anwendung ANW gebunden sind, sondern dynamisch. Diese Art von Programmen werden als Dynamic Link Library (DLL) bezeichnet.

Die nötigen Änderungen sind bekannt.

Das erfindungsgemäße Verfahren selbst wird auch bei diesen monolithischen, graphikbasierte Fenstersysteme GDWS wie im vorigen beschrieben durchgeführt.

## Patentansprüche

1. Verfahren zur Zugriffskontrolle auf rechnerkontrollierte Programme (P), die von mehreren Benutzereinheiten (XSi, i = 1..n) gleichzeitig genutzt werden können,
- bei dem von einer Benutzereinheit (XSi) eine Anforderung (Ai) für ein Programm (P) gesendet wird (1),
- bei dem in einen Mittel zur Organisation des Datenflusses (ASC) die Anforderung (Ai) für ein Programm empfangen wird (2),
- bei dem in dem Mittel (ASC) geprüft wird, ob die Benutzereinheit (XSi), von der die Anforderung (Ai) gesendet wurde, das Programm (P) ursprünglich gestartet hatte (3),
- bei dem, falls die die Anforderung (Ai) sendende Benutzereinheit (XSi) das Programm (P) gestartet hatte, die Anforderung (Ai) an das Programm (P) weitergeleitet wird (4),
- bei dem, falls die die Anforderung (Ai) sendende Benutzereinheit (XSi) das Programm (P) nicht gestartet hatte, anhand einer Zugriffskontrolldatenbank (ZDK) eine Zugriffskontrolle für die Anforderung (Ai) durchgeführt wird (5),
- bei dem, falls die Zugriffskontrolle ergibt, daß die Anforderung (Ai) eine erlaubte Anforderung darstellt, die Anforderung (Ai) an das Programm (P) weitergeleitet wird ( 6, 8), und
- bei dem, falls die Zugriffskontrolle (ZDK) ergibt, daß die Anforderung (Ai) eine unerlaubte Anforderung darstellt, die Anforderung (Ai) nicht an das Programm (P) weitergeleitet wird ( 6, 7),
- bei dem vor der Kontrolle, ob die Benutzereinheit (XSi) das Programm (P) ursprünglich gestartet hatte (3), in dem Mittel (ASC) überprüft wird, ob die Benutzereinheit (XSi) zu dem Sendezeitpunkt der Anforderung (Ai) ein Bearbeitungsrecht besaß (51), und
- bei dem, falls die Benutzereinheit (XSi) kein Bearbeitungsrecht besaß, die Anforderung (Ai) nicht an das Programm (P) weitergeleitet wird (52).

2. Verfahren nach Anspruch 1,
bei dem zu Beginn des Verfahrens eine Authentikation der Benutzereinheit (XSi), die die Anforderung (Ai) gesendet hat, und/oder der Anforderung (Ai) durchgeführt wird (42).

3. Verfahren nach Anspruch 2,
bei dem bei einem Verbindungsaufbau zwischen einer Benutzereinheit (XSi) und dem Programm (P) eine Initialisierungsphase zur Authentikation durchgeführt wird (41).

4. Verfahren nach Anspruch 3,
bei dem in der Initialisierungsphase folgende Schritte vorgesehen werden, wobei die Benutzereinheit (XSi) ein Benutzerzertifikat besitzt und das Mittel (ASC) ein Programmzertifikat besitzt:
a) von dem Mittel (ASC) wird eine erste Zufallszahl erzeugt,
b) von dem Mittel (ASC) wird eine erste Verhandlungsnachricht an die Benutzereinheit (XSi) gesendet, die mindestens folgende Komponenten aufweist:
-- das Programmzertifikat,
-- die erste Zufallszahl,
-- einen ersten Vorschlag, und
-- eine digitale Unterschrift, die mindestens über die erste Zufallszahl, und den ersten Vorschlag gebildet wird,
c) die erste Verhandlungsnachricht wird von der Benutzereinheit (XSi) empfangen,
d) von der Benutzereinheit (XSi) wird das Programmzertifikat überprüft,
e) von der Benutzereinheit (XSi) wird die digitale Unterschrift überprüft,
f) von der Benutzereinheit (XSi) wird, falls die Überprüfung des Programmzertifikats und der digitalen Unterschrift ein positives Ergebnis liefert, überprüft, ob die vorgeschlagenen kryptographischen Algorithmen im weiteren verwendet werden können,
g) falls die kryptographischen Algorithmen von der Benutzereinheit (XSi) nicht unterstützt werden, wird von der Benutzereinheit (XSi) ein zweiter Vorschlag in einer zweiten Vorschlagsnachricht gebildet und an das Mittel (ASC) gesendet, die mindestens folgende Komponenten aufweist:
-- das Benutzerzertifikat,
-- eine zweite Zufallszahl, die von der Benutzereinheit erzeugt wird,
-- den weiteren Vorschlag, und
-- eine digitale Unterschrift, die mindestens über die erste Zufallszahl, die zweite Zufallszahl, und den weiteren Vorschlag gebildet wird,
h) falls die kryptographischen Algorithmen unterstützt werden, wird von der Benutzereinheit (XSi) eine Bestätigungsnachricht gebildet und an das Mittel (ASC) gesendet, die mindestens folgende Komponenten aufweist:
-- das Benutzerzertifikat,
-- eine zweite Zufallszahl, die von der Benutzereinheit (XSi) erzeugt wird,
-- eine positive Bestätigung, und
-- eine digitale Unterschrift, die mindestens über die erste Zufallszahl, die zweite Zufallszahl, und die positive Bestätigung gebildet wird,
i) die zweite Verhandlungsnachricht oder die Bestätigungsnachricht wird von dem Mittel (ASC) empfangen,
j) von dem Mittel (ASC) wird das Benutzerzertifikat überprüft,
k) von dem Mittel (ASC) wird die digitale Unterschrift überprüft,
l) von dem Mittel (ASC) wird, falls die Überprüfung des Benutzerzertifikats und der digitalen Unterschrift ein positives Ergebnis liefert und die Bestätigungsnachricht empfangen wurde, ein erster Sitzungsschlüssel unter Berücksichtigung der vereinbarten kryptographischen Algorithmen für eine folgende Nutzdatenübertragungsphase erzeugt,
m) von dem Mittel (ASC) wird, falls die Überprüfung des Programmzertifikats und der digitalen Unterschrift ein positives Ergebnis liefert und die weitere Verhandlungsnachricht empfangen wurde, überprüft, ob die vorgeschlagenen kryptographischen Algorithmen im weiteren verwendet werden können,
o) von dem Mittel (ASC) wird, falls die vorgeschlagenen kryptographischen Algorithmen im weiteren verwendet werden können, ein erster Sitzungsschlüssel unter Berücksichtigung der vereinbarten kryptographischen Algorithmen für eine folgende Nutzdatenübertragungsphase erzeugt,
p) von dem Mittel (ASC) wird eine erste Sitzungsschlüsselnachricht an die Benutzereinheit (XSi) gesendet, die mindestens folgende Komponenten aufweist:
-- den mit einem öffentlichen Schlüssel der Benutzereinheit (XSi) verschlüsselten ersten Sitzungsschlüssel,
-- eine mindestens über die erste Zufallszahl, die zweite Zufallszahl, den ersten Sitzungsschlüssel gebildete digitale Unterschrift,
q) von der Benutzereinheit (XSi) wird der erste Sitzungsschlüssel unter Verwendung eines privaten Benutzerschlüssels ermittelt,
r) von der Benutzereinheit (XSi) wird die digitale Unterschrift überprüft,
s) von der Benutzereinheit (XSi) wird eine zweite Sitzungsschlüsselnachricht an das Programm gesendet, die mindestens folgende Komponenten aufweist:
-- den mit einem öffentlichen Schlüssel dem Mittel (ASC) verschlüsselten, zweiten Sitzungsschlüssel,
-- eine mindestens über die erste Zufallszahl, die zweite Zufallszahl, den zweiten Zwischenschlüssel gebildete digitale Unterschrift oder Hash-Wert,
t) von dem Mittel (ASC) wird die zweite Sitzungsschlüsselnachricht empfangen,
u) von dem Mittel (ASC) wird die digitale Unterschrift oder der Hash-Wert überprüft,
v) falls die Überprüfung ein positives Ergebnis liefert, beginnt die Nutzdatenübertragungsphase, bei der jede Instanz für das Senden von Daten den Sitzungsschlüssel verwendet, der von ihr selbst generiert wurde und bei der der jeweils empfangene Sitzungsschlüssel der Partnerinstanz ausschließlich zum Empfang von versendeten Nachrichten verwendet wird.

5. Verfahren nach einem der Ansprüche 1 bis 4,
bei dem als das Mittel (ASC) eine Multiplexerkomponente verwendet wird.

6. Verfahren nach Anspruch 1 bis 5,
bei dem die Zugriffskontrolldatenbank (ZDK) mindestens folgende Informationen aufweist:
- Eine Angabe (AC) des Klienten (XC), auf den sich der Eintrag in der Zugriffskontrolldatenbank (ZDK) bezieht,
- die Angabe des Fensters (AF), auf den sich der Eintrag in der Zugriffskontrolldatenbank (ZDK) bezieht,
- die Benutzereinheit (XSi),
- Angabe eines Anforderungstyps (AAI), dessen nähere Eigenschaften in weiteren Parametern (WP) angegeben sind,
- die weiteren Parameter (WP), die die Anforderung (Ai) aufweisen muss, um als eine erlaubte Anforderung akzeptiert zu werden.

## Claims

1. Method for controlling access to computer-controlled programs (P) which can be used simultaneously by a plurality of user units (XSi, i = 1..n),
- in which (1) a user unit (XSi) sends a request (Ai) for a program (P),
- in which (2) a means for organizing the flow of data (ASC) receives the request (Ai) for a program,
- in which (3) the means (ASC) checks whether the user unit (XSi) from which the request (Ai) was sent started the program (P) originally,
- in which (4) the request (Ai) is forwarded to the program (P) if the user unit (XSi) sending the request (Ai) started the program (P),
- in which (5) an access control database (ZDK) is used to perform an access control for the request (Ai) if the user unit (XSi) sending the request (Ai) did not start the program (P),
- in which (6, 8) the request (Ai) is forwarded to the program (P) if the result of the access control is that the request (Ai) is a permissible request, and
- in which (6, 7) the request (Ai) is not forwarded to the program (P) if the result of the access control (ZDK) is that the request (Ai) is an impermissible request,
- in which (51) the control of whether the user unit (XSi) starting the program (P) originally (3) is preceded by a check in the means (ASC) to determine whether the user unit (XSi) had processing authorization at the time at which the request (Ai) was sent, and
- in which (52) the request (Ai) is not forwarded to the program (P) if the user unit (XSi) did not have processing authorization.

2. Method according to Claim 1,
in which (42) at the start of the method the user unit (XSi) which sent the request (Ai) and/or the request (Ai) is/are authenticated.

3. Method according to Claim 2,
in which (41) an initialization phase for authentication is performed when a connection is set up between a user unit (XSi) and the program (P).

4. Method according to Claim 3,
in which the initialization phase includes the following steps, where the user unit (XSi) has a user certificate and the means (ASC) has a program certificate:
a) the means (ASC) generates a first random number,
b) the means (ASC) sends a first negotiation message to the user unit (XSi) which contains at least the following components:
-- the program certificate,
-- the first random number,
-- a first proposal, and
-- a digital signature which is formed at least using the first random number and the first proposal,
c) the first negotiation message is received by the user unit (XSi),
d) the user unit (XSi) checks the program certificate,
e) the user unit (XSi) checks the digital signature,
f) if the check on the program certificate and the digital signature delivers a positive result, the user unit (XSi) checks whether the proposed cryptographic algorithms can be used subsequently,
g) if the cryptographic algorithms are not supported by the user unit (XSi), the user unit (XSi) forms a second proposal in a second proposal message and sends it to the means (ASC), said proposal message containing at least the following components:
-- the user certificate,
-- a second random number generated by the user unit,
-- the further proposal, and
-- a digital signature which is formed at least using the first random number, the second random number and the further proposal,
h) if the cryptographic algorithms are supported, the user unit (XSi) forms an acknowledgement message and sends it to the means (ASC), said acknowledgement message containing at least the following components:
-- the user certificate,
-- a second random number generated by the user unit (XSi),
-- a positive acknowledgement, and
-- a digital signature which is formed at least using the first random number, the second random number and the positive acknowledgement,
i) the second negotiation message or the acknowledgement message is received by the means (ASC),
j) the means (ASC) checks the user certificate,
k) the means (ASC) checks the digital signature,
l) if the check on the user certificate and the digital signature delivers a positive result and the acknowledgement message has been received, the means (ASC) generates a first session key taking into account the agreed cryptographic algorithms for a subsequent user-data transmission phase,
m) if the check on the program certificate and the digital signature delivers a positive result and the further negotiation message has been received, the means (ASC) checks whether the proposed cryptographic algorithms can be used subsequently,
o) if the proposed cryptographic algorithms can be used subsequently, the means (ASC) generates a first session key taking into account the agreed cryptographic algorithms for a subsequent user-data transmission phase,
p) the means (ASC) sends a first session key message to the user unit (XSi) which contains at least the following components:
-- the first session key encrypted using a public key from the user unit (XSi),
-- a digital signature formed at least using the first random number, the second random number and the first session key,
q) the user unit (XSi) ascertains the first session key using a private user key,
r) the user unit (XSi) checks the digital signature,
s) the user unit (XSi) sends a second session key message to the program, containing at least the following components:
-- the second session key, encrypted using a public key from the means (ASC),
-- a digital signature or hash value formed at least using the first random number, the second random number and the second intermediate key,
t) the means (ASC) receives the second session key message,
u) the means (ASC) checks the digital signature or the hash value,
v) if the check delivers a positive result, the user-data transmission phase starts, this phase involving each instance using the session key, which it itself has generated, for sending data and involving the partner instance's respective session key received being used exclusively for receiving sent messages.

5. Method according to one of Claims 1 to 4,
in which the means (ASC) used is a multiplexer component.

6. Method according to Claims 1 to 5,
in which the access control database (ZDK) contains at least the following information:
- a statement (AC) indicating the client (XC) to which the entry in the access control database (ZDK) refers,
- the statement indicating the window (AF) to which the entry in the access control database (ZDK) refers,
- the user unit (XSi),
- a statement indicating a request type (AAI), whose more specific properties are indicated in further parameters (WP),
- the further parameters (WP) which the request (Ai) needs to have in order to be accepted as a permissible request.

## Revendications

1. Procédé de contrôle d'accès à des programmes (P) contrôlés par ordinateur pouvant être utilisés simultanément par plusieurs terminaux utilisateurs (XSi, i = 1..n),
- dans lequel une demande (Ai) pour un programme (P) est émise par un terminal utilisateur (XSi) (1),
- dans lequel la demande (Ai) pour un programme est reçue dans un moyen pour l'organisation du flux de données (ASC) (2),
- dans lequel il est vérifié dans le moyen (ASC) si le terminal utilisateur (XSi), duquel la demande (Ai) a été émise, avait initialement démarré le programme (P) (3),
- dans lequel, au cas où le terminal utilisateur (XSi) émettant la demande (Ai) avait démarré le programme (P), la demande (Ai) est transmise au programme (P) (4),
- dans lequel, au cas où le terminal utilisateur (XSi) émettant la demande (Ai) n'avait pas démarré le programme (P), un contrôle d'accès est exécuté pour la demande (Ai) à l'aide d'une banque de données de contrôle d'accès (ZDK) (5),
- dans lequel, au cas où le contrôle d'accès indique que la demande (Ai) représente une demande autorisée, la demande (Ai) est transmise au programme (P) (6, 8), et
- dans lequel, au cas où le contrôle d'accès (ZDK) indique que la demande (Ai) représente une demande non autorisée, la demande (Ai) n'est pas transmise au programme (P) (6, 7),
- dans lequel, avant le contrôle pour savoir si le terminal utilisateur (XSi) avait initialement démarré le programme (P), il est vérifié dans le moyen (ASC) si le terminal utilisateur (XSi) possédait un droit de traitement au moment d'émission de la demande (Ai) (51), et
- dans lequel, au cas où le terminal utilisateur (XSi) ne possédait pas de droit de traitement, la demande (Ai) n'est pas transmise au programme (P) (52).

2. Procédé selon la revendication 1,
dans lequel une authentification du terminal utilisateur (XSi), qui a émis la demande (Ai), et/ou de la demande (Ai) est exécutée au début du procédé (42).

3. Procédé selon la revendication 2,
dans lequel, lors de l'établissement d'une connexion entre un terminal utilisateur (XSi) et le programme (P), une phase d'initialisation est réalisée pour l'authentification (41).

4. Procédé selon la revendication 3,
dans lequel les étapes suivantes sont prévues au cours de la phase d'initialisation, le terminal utilisateur (XSi) possédant un certificat d'utilisateur et le moyen (ASC) possédant un certificat de programme :
a) un premier nombre aléatoire est généré par le moyen (ASC),
b) un premier message de négociation est émis au terminal utilisateur (XSi) par le moyen (ASC), ce message présentant au moins les composantes suivantes :
- le certificat de programme,
- le premier nombre aléatoire,
- une première proposition, et
- une signature numérique qui est formée au moins par le premier nombre aléatoire et la première proposition,
c) le premier message de négociation est reçu par le terminal utilisateur (XSi),
d) le certificat de programme est vérifié par le terminal utilisateur (XSi),
e) la signature numérique est vérifiée par le terminal utilisateur (XSi),
f) au cas où la vérification du certificat de programme et de la signature numérique fournit un résultat positif, il est vérifié par le terminal utilisateur (XSi) si les algorithmes cryptographiques proposés peuvent être utilisés dans la suite,
g) au cas où les algorithmes cryptographiques ne sont pas supportés par le terminal utilisateur (XSi), une deuxième proposition est formée par le terminal utilisateur (XSi) dans un deuxième message de proposition et est émis au moyen (ASC), ce message présentant au moins les composantes suivantes :
- le certificat d'utilisateur,
- un deuxième nombre aléatoire généré par le terminal utilisateur,
- la proposition suivante, et
- une signature numérique qui est formée au moins par le premier nombre aléatoire, le deuxième nombre aléatoire et la proposition suivante,
h) au cas où les algorithmes cryptographiques sont supportés, un message de confirmation est formé par le terminal utilisateur (XSi) et est émis au moyen (ASC), ce message présentant au moins les composantes suivantes :
- le certificat d'utilisateur,
- un deuxième nombre aléatoire généré par le terminal utilisateur (XSi),
- une confirmation positive, et
- une signature numérique qui est formée au moins par le premier nombre aléatoire, le deuxième nombre aléatoire et la confirmation positive,
i) le deuxième message de négociation ou le message de confirmation est reçu par le moyen (ASC),
j) le certificat d'utilisateur est vérifié par le moyen (ASC),
k) la signature numérique est vérifiée par le moyen (ASC),
l) au cas où la vérification du certificat d'utilisateur et la signature numérique fournit un résultat positif et que le message de confirmation a été reçu, un premier code de session est généré par le moyen (ASC) en tenant compte des algorithmes cryptographiques convenus pour une phase suivante de transmission de données utiles,
m) au cas où la vérification du certificat de programme et de la signature numérique fournit un résultat positif et que le message de négociation suivant a été reçu, il est vérifié par le moyen (ASC) si les algorithmes cryptographiques proposés peuvent être utilisés dans la suite,
n) au cas où les algorithmes cryptographiques proposés peuvent être utilisés dans la suite, un premier code de session est généré par le moyen (ASC) en tenant compte des algorithmes cryptographiques convenus pour une phase suivante de transmission de données utiles,
o) un premier message de code de session est émis par le moyen (ASC) au terminal utilisateur (XSi), ce message présentant au moins les composantes suivantes :
- le premier code de session codé au moyen d'un code public du terminal utilisateur (XSi),
- une signature numérique formée au moins par le premier nombre aléatoire, le deuxième nombre aléatoire, le premier code de session,
p) le premier code de session est déterminé par le terminal utilisateur (XSi) en utilisant un code utilisateur privé,
q) la signature numérique est vérifiée par le terminal utilisateur (XSi),
r) un deuxième message de code de session est émis au programme par le terminal utilisateur (XSi), ce message présentant au moins les composantes suivantes :
- le deuxième code de session codé au moyen d'un code public par le moyen (ASC),
- une signature numérique ou une valeur de contrôle formée au moins par le premier nombre aléatoire, le deuxième nombre aléatoire, le deuxième code intermédiaire,
s) le deuxième message de code de session est reçu par le moyen (ASC),
t) la signature numérique ou la valeur de contrôle est vérifiée par le moyen (ASC),
u) au cas où la vérification fournit un résultat positif, la phase de transmission de données utiles commence, dans laquelle chaque instance utilise, pour l'émission de données, le code de session qui a été généré par elle-même et dans laquelle le code de session, respectivement reçu, de l'instance partenaire est utilisé exclusivement pour la réception de messages émis.

5. Procédé selon l'une quelconque des revendications 1 à 4,
dans lequel une composante de multiplexeur est utilisée comme moyen (ASC).

6. Procédé selon les revendications 1 à 5,
dans lequel la banque de données de contrôle d'accès (ZDK) présente au moins les informations suivantes :
- une indication (AC) du client (XC) auquel l'enregistrement dans la banque de données de contrôle d'accès (ZDK) fait référence,
- l'indication de la fenêtre (AF) à laquelle l'enregistrement dans la banque de données de contrôle d'accès (ZDK) fait référence,
- le terminal utilisateur (XSi),
- l'indication du type de demande (AAI) dont les caractéristiques plus détaillées sont indiquées dans des paramètres supplémentaires (WP),
- les paramètres supplémentaires (WP) que la demande (Ai) doit présenter afin d'être acceptée comme demande autorisée.
